# EUROPEAN PATENT APPLICATION

(11) **EP 2 436 466 A1**
(43) Date of publication of application: **04.04.2012**
(21) Application number: 10780655.6
(22) Date of filing: 28.05.2010
(51) Int. Cl.: B23B 51/00

(54) **INDEXABLE DRILL AND DRILL BODY**

(30) Priority: 29.05.2009 JP 2009129767
(71) Applicant: Tungaloy Corporation, Iwaki-shi Fukushima 970-1144 (JP)
(72) Inventor: ONOZAWA Satoshi, Iwaki-shi Fukushima 970-1144 (JP); NISIKAWA Koji, Iwaki-shi Fukushima 970-1144 (JP)
(74) Representative: Vossius & Partner
(86) International application number: PCT/JP2010/059134
(87) International publication number: WO 2010/137701

(57) **Abstract**

An indexable drill in which the chip discharging efficiency is enhanced is provided. A drill body of an indexable drill includes: a chip discharging groove which discharges chips produced by a cutting insert on a wall surface defining the chip discharging groove; and an insert attachment seat on which the cutting insert formed in a front end side, in a rotational axis direction, of a first wall surface of the chip discharging groove that faces a drill rotation direction is detachably mounted. A chip formation portion is formed which includes at least any of a plurality of protruding portions that protrudes outward from a second wall surface and a plurality of concave portions that is concave inward from the second wall surface, at least in a front end portion of the second wall surface of the chip discharging groove that faces a rear side of the drill rotation direction.

## Description

### Technical Field

The present invention relates to an indexable drill to which a cutting insert is detachably attached and to the drill body of the indexable drill.

### Background Art

Patent Literature 1 discloses an indexable drill in which a plurality of rows of grooves extending in an axis direction of a drill body is formed on a wall surface of a chip discharging groove. Since only a plurality of surfaces formed by these rows of grooves makes contact with chips, a contact area between the wall surface and the chips is reduced, and a friction force produced between the both of them is reduced. Thus, it is possible to effectively facilitate the discharge of the chips, and it is therefore possible to smoothly discharge the chips when a hole having a relatively high ratio L/D between the depth L of the hole and the diameter D of the hole is processed or when a difficult-to-cut material such as a stainless steel or a mild steel is drilled.

### Citation List

### Patent Literature

PTL 1: Japanese Patent Laid-Open No. H06-91416(1994)

### Summary of Invention

### Technical Problem

Incidentally, in the indexable drill disclosed in Patent Literature 1, although the plurality of rows of surfaces formed on the wall surface of the chip discharging groove allows the contact area between the wall surface of the chip discharging groove and the chips to be reduced, the friction produced between the plurality of rows of surfaces and the chips is increased, and the plurality of rows of surfaces is more likely to wear out. Hence, disadvantageously, the effect of smoothly discharging chips is unlikely to continue for a long period of time.

The present invention is made to solve the foregoing problem; an object of the present invention is to provide an indexable drill that can smoothly discharge chips for a long period of time and a drill body.

### Solution to Problem

A drill body according to the present invention is a drill body of an indexable drill and includes: a chip discharging groove which is formed from a front end surface to a back end side in a rotational axis direction for discharging chips produced by a cutting insert; and an insert attachment seat on which the cutting insert formed on a front end side, in the rotational axis direction, of a first wall surface of the chip discharging groove that faces a drill rotation direction is detachably attached, wherein a chip formation portion is formed which includes at least any of a plurality of protruding portions that protrudes outward from a second wall surface and a plurality of concave portions that is concave inward from the second wall surface, among wall surfaces that define the chip discharging groove, at least in a front end portion of the second wall surface of the chip discharging groove that faces a rear side of the drill rotation direction.

Preferably, the chip formation portion includes, in the vicinity of a surface thereof, a hardened layer that has a hardness increased higher than that of the other regions of the wall surface.

More preferably, a surface roughness of the wall surface other than the chip formation portion is smaller than a surface roughness of the chip formation portion. Preferably, the surface roughness of the wall surface other than the chip formation portion is set such that the maximum height Rz is not more than 3 µm (JIS · B0601-2001).

The insert attachment seat includes an inner attachment seat for mounting the cutting insert close to the rotational axis and an outer attachment seat for mounting the cutting insert away from the rotational axis, a part of the wall surface of the chip discharging groove is formed in a thinned wall portion that is thinned by the inner attachment seat and the outer attachment seat, and the hardened layer is formed in a vicinity of a surface of the thinned wall portion.

Preferably, the protruding portions or the concave portions are formed by laser processing. The hardened layer is hardened by laser quenching.

Preferably, on the wall surface, a marking that defines a formation range of the chip formation portion is formed.

The indexable drill according to the present invention includes the drill body according to the present invention.

### Advantageous Effects of Invention

According to the present invention, the chip formation portion is formed which includes a plurality of protruding portions that protrudes outward from the wall surface in the front end portion of the groove that faces the rear side of the drill rotation direction and a plurality of concave portions that is concave inward from the wall surface, and thus it is possible to significantly reduce a friction force produced between the chip formation portion and the chips. Hence, the deformation (curling) and the breaking of the chips and the discharge of the chips are facilitated, and the vibration and the chatter of the drill are also reduced. Furthermore, the hardness of the vicinity of the surface of the chip formation portion is increased, and thus it is possible to prevent the wear of the chip formation portion from developing at an early stage. In this way, the facilitation of the deformation (curling) and the breaking of the chips and the discharge of the chips and the reduction of the vibration and the chatter described above are continuously maintained for a long time.

### Brief Description of Drawings

Fig. 1 is a side view of an indexable drill according to an embodiment of the present invention;
Fig. 2 is an enlarged view of a front end portion of the indexable drill of Fig. 1;
Fig. 3 is a front view of the front end portion of the indexable drill of Fig. 1, when viewed in a rotational axis direction;
Fig. 4 is a perspective view of the indexable drill of Fig. 1;
Fig. 5 is an enlarged view of the front end portion of the indexable drill shown in Fig. 4;
Fig. 6 is another perspective view of the indexable drill shown in Fig. 1;
Fig. 7 is an enlarged view of the front end portion of Fig. 6; and
Fig. 8 is a diagram schematically showing a cross-sectional structure of a hardened layer.

### Description of Embodiments

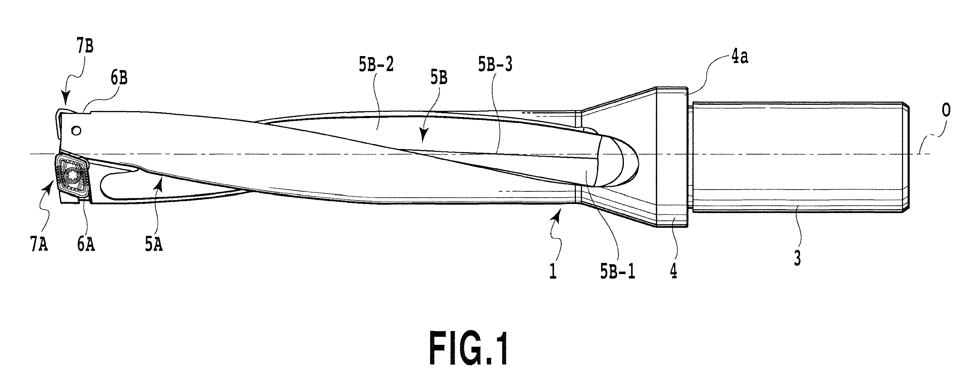

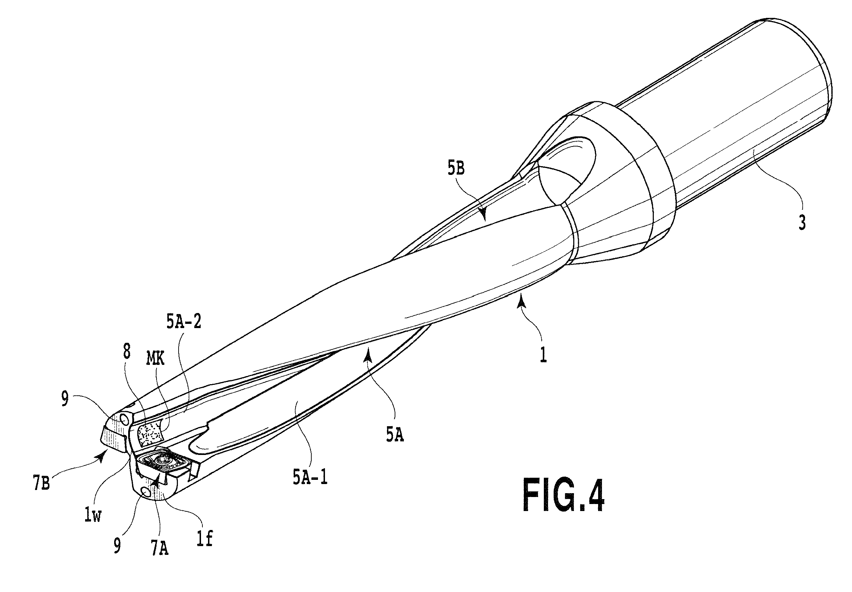

An embodiment of an indexable drill and a drill body according to the present invention will be described below with reference to Figs. 1 to 8.

The indexable drill shown in Figs. 1 to 7 includes a drill body 1 and two cutting inserts 7A and 7B that are attached to the drill body 1.

The drill body 1 is a member that has a rotational axis O of the indexable drill and that is substantially cylindrical, and includes a shank portion 3, a flange portion 4, a first chip discharging groove 5A and a second chip discharging groove 5B and an inner attachment seat 6A and an outer attachment seat 6B.

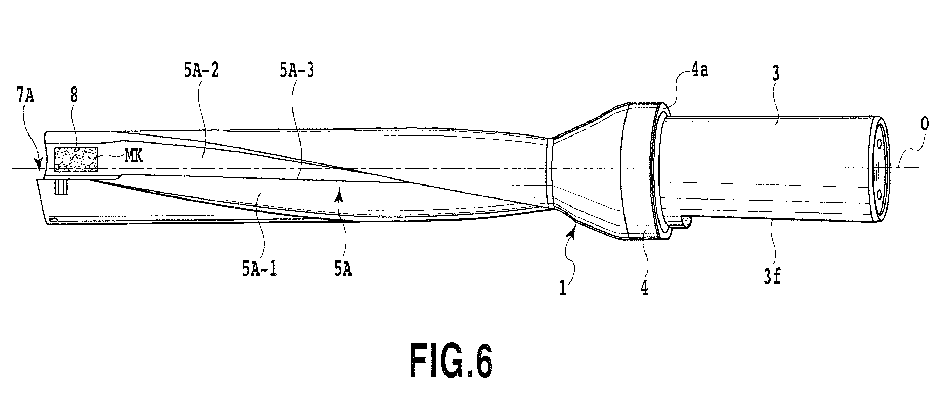

The shank portion 3 is formed on the back end side (on the right side of Fig. 1) of the rotational axis O of the drill body 1 so that the drill body 1 is detachably attached to machine tool such as a machining center. As shown in Fig. 6, the shank portion 3 has a surface 3f parallel to the rotational axis O. The flange portion 4 is provided next to the shank 3; the flange portion 4 has an end surface 4f that makes contact with, when mounted on a machine tool, the main shaft of the machine tool or an end surface of a retainer.

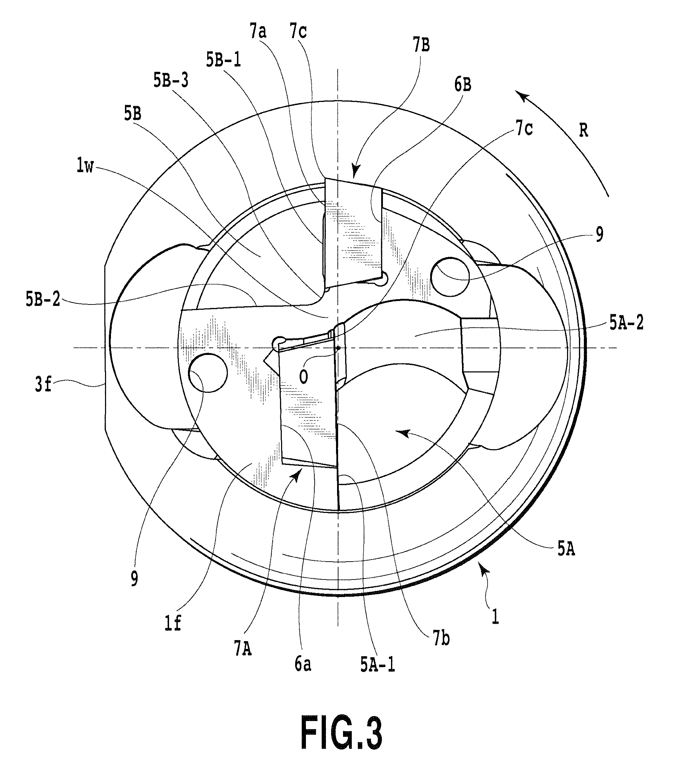

The first and second chip discharging grooves 5A and 5B are formed in a helical shape from the front end surface 1f of the drill body 1 toward the back end side halfway through the flange portion 4. The first and second chip discharging grooves 5A and 5B are grooves that discharge chips produced by the cutting inserts 7A and 7B from the front end surface 1f of the drill body 1 toward the back end side. The first and second chip discharging grooves 5A and 5B are symmetrical with respect to the rotational axis O of the drill body 1. In the present embodiment, the first and second chip discharging grooves 5A and 5B are respectively defined by first wall surfaces 5A-1 and 5B-1 that are curved and faces in a drill rotation direction R shown in Fig. 3 and second wall surfaces 5A-2 and 5B-2 that are curved and connected to the first wall surfaces 5A-1 and 5B-1, and faces in the opposite direction to a tool rotation direction R.

The inner attachment seat 6A is formed concavely in the first wall surface 5A-1 of the front end portion of the first chip discharging groove 5A so as to mount the cutting insert 7A. The outer attachment seat 6B is formed concavely in the first wall surface 5B-1 of the front end portion of the second chip discharging groove 5B so as to mount the cutting insert 7B. The inner attachment seat 6A arranges the cutting insert 7A close to the rotational axis O; the outer attachment seat 6B arranges the cutting insert 7B away from the rotational axis O.

Since, in the front end portion of the drill body 1, the inner attachment seat 6A and the outer attachment seat 6B are formed, as shown in Fig. 3 and the like, a portion between the inner attachment seat 6A and the second wall surface 5B-2 and a portion between the outer attachment seat 6B and the second wall surface 5B-2 are formed into a thinned wall portion 1w that is thinner than a wall portion on the rear side.

Two oil holes 9 are formed within the drill body 1, and one end of each of the oil holes 9 is open to the front end surface 1f and the other end is open to the back end surface of the shank 3 of the drill body 1. The oil holes 9 are formed to discharge cutting oil from the front end surface 1f to the point (the bottom edge of a cutting edge) where the cutting insert makes contact with an item to be cut.

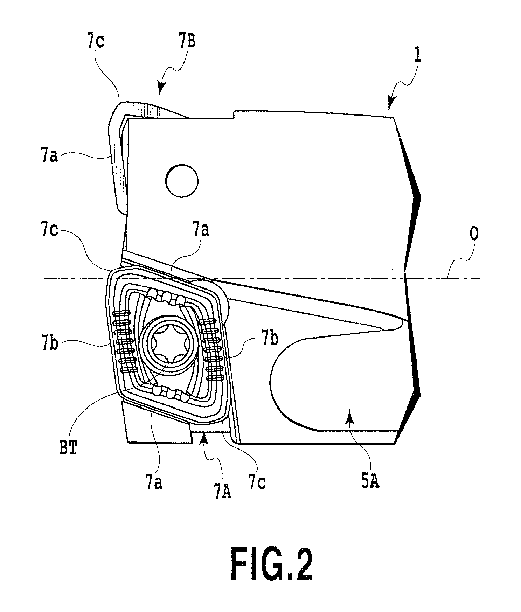

The cutting inserts 7A and 7B, which are respectively attached with clamp bolts BT to the inner attachment seat 6A and the outer attachment seat 6B, have the same structure, and are flat plate-shaped positive type cutting inserts, in the present embodiment, that are formed of hard material such as a cemented carbide, a cermet, a ceramic or the like and that are formed substantially in the outside shape of a parallelogram. As shown in Fig. 2 and the like, when the cutting inserts 7A and 7B are attached to the inner attachment seat 6A and the outer attachment seat 6B, an upper surface opposite a seating surface forms a rake surface, and a side surface forms a flank surface. The flank angle given to the flank surface is 11 degrees in the present embodiment. On the rake surface, a chip breaker that is raised upward from the rake surface is formed. In the inner portions of the cutting inserts 7A and 7B, attachment holes are formed that penetrate from the rake surface to the seating surface.

In the cutting inserts 7A and 7B, as shown in Fig. 2, of the intersection portion where the rake surface intersects the flank surface, each of the short side portions of an approximate parallelogram forms a cutting edge 7a, each of the long side portions forms a cutting edge 7b and each of the corner portions that form an acute angle forms a cutting edge 7c. In the state shown in Fig. 2, in drilling or the like, for the cutting insert 7A (hereinafter also referred to as an inner insert 7A), the cutting edges 7b and 7c contribute to the cutting, and, for the cutting insert 7B (hereinafter also referred to as an outer insert 7B), the cutting edges 7a and 7b contribute to the cutting. With respect to the inner insert 7A and the outer insert 7B, the width of the cutting made by the outer insert 7B is shorter than the width of the cutting made by the inner insert 7A.

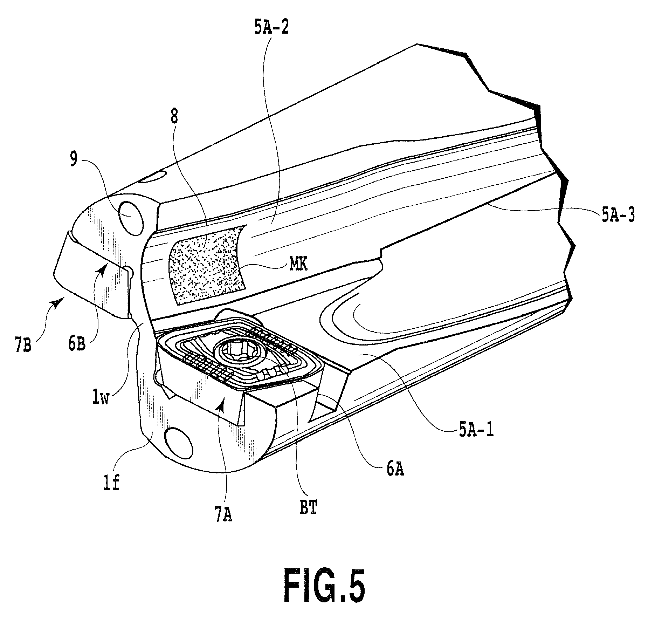

As shown in Fig. 5 and the like, in the front end portion of the second wall surface 5A-2 of the first chip discharging groove 5A, a chip formation portion 8 is formed. Although not illustrated, in the second wall surface 5B-2 of the second chip discharging groove 5B, the chip formation portion 8 is also formed.

The formation region of the chip formation portion 8 forms the thinned wall portion 1w described above. The surface of the chip formation portion 8 has projections and recesses; as described later, the projections and recesses reduce the actual contact area when chips produced by the cutting insert 7A make direct contact with the surface and thereby decrease the friction. Furthermore, in the vicinity of the surface of the chip formation portion 8, a hardened layer that is higher in hardness than the other parts of the second wall surface 5A-2 is formed, and thus the hardness of the surface is increased.

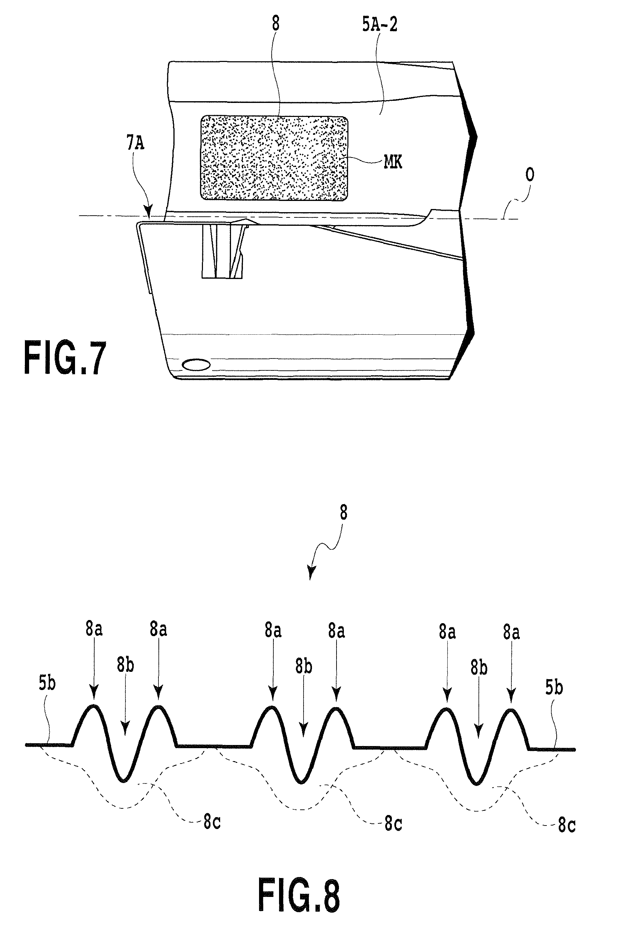

Fig. 8 schematically shows an example of the cross-sectional structure of the chip formation portion 8. The chip formation portion 8 has a plurality of protruding portions 8a and concave portions 8b, and also has the hardened layer 8c of high hardness in the vicinity of the surface. The chip formation portion 8 is formed by, for example, laser processing. Specifically, when the surface of the front end portion of the second wall surface 5A-2 is irradiated with laser light, in the portion irradiated with the laser light, the protruding portions 8a and the concave portions 8b are formed by its expansion and evaporation caused by rapid heating.

When the laser light is irradiated to a portion broader than a predetermined range to form the chip formation portion 8, the production efficiency may be reduced, and the strength of the drill body 1 may be reduced. Hence, it is preferable that the formation range of the chip formation portion 8, that is, the range to be irradiated with the laser light can be previously recognized. Therefore, as shown in Figs. 5 and 7, a marking MK that defines the formation range is formed in advance in a boundary portion or the like of the chip formation portion 8. For example, the marking MK is formed with a plurality of shallow grooves or holes processed with a small-diameter end mill or a small-diameter drill.

Furthermore, in the laser processing described above, laser quenching is simultaneously performed on the chip formation portion 8, and thus the hardened layer 8c is formed. In other words, the portion irradiated with the laser light is rapidly heated and then is air-cooled, and is thereby formed into the hardened layer 8c having a higher hardness than the hardness that the drill body originally has.

As a laser processing device used in the laser processing, a known laser processing device can be used. Conditions such as the output (average output) of the laser light, the speed of the processing and an irradiation angle of the laser light can be appropriately selected according to the height of the protruding portion 8a, the depth of the concave portion 8b, the thickness of the hardened layer 8c and the like. In order to maintain a substantially constant state of contact with the chips, preferably, the protruding portions 8a and the concave portions 8b are regularly arranged and evenly distributed; however, the present invention is not limited to this configuration.

In order to acquire hardness and toughness necessary and sufficient for the cutting, the drill body 1 is subjected to thermal processing such as quenching and tempering, and thus has a substantially constant basic hardness as a whole. In order for the hardened layer 8c of the chip formation portion 8 to have a higher hardness than the basic hardness, a carbon steel, an alloy steel, a tool steel or the like that has property of being hardened when it is quenched is used as the formation material of the drill body 1. Specifically, an alloy tool steel such as SKD11 (JIS · G4404-2006) is used.

The hardness of the hardened layer 8c of the chip formation portion 8 is higher than the basic hardness of the drill body 1 but the upper limit is preferably about Hv 800. In order to prevent the thinned wall portion 1w from undergoing brittle fracture, the thickness of the hardened layer 8c is preferably adjusted according to the thickness of the thinned wall portion 1w; in the present embodiment, the thickness falls within a range of 0.05 mm to 0.50 mm.

Since the projections and the recesses are formed, the surface roughness of the chip formation portion 8 is set such that the maximum height Rz is more than 3 µm (JIS · B0601-2001). On the other hand, the wall surfaces 5A-1 and 5A-2 other than the chip formation portion 8 are preferably smoothed as much as possible in order to increase the flowability of the chips and the cutting oil; in the present embodiment, the maximum height Rz is set not more than 3 µm (JIS · B0601-2001) by cutting.

The chip formation portion 8 preferably covers the range in which the chips cut from the item to be cut first makes contact with the chip formation portion 8. In the indexable drill of the present embodiment, the length of the chip formation portion 8 in the direction of the rotational axis O preferably falls within a range up to about the cutting edge diameter D of the drill, from the front end portion to the back end side of the second wall surface 5A-2. The size of the drill body 1 of the chip formation portion 8 in the radial direction preferably extends over a substantially entire region in the width direction of the second wall surface 5A-2.

In the drilling processing performed with the indexable drill of the present embodiment, the chips are continuously formed by the cutting of the item to be cut by the inner insert 7A and the outer insert 7B. The formed chips are discharged to the back end side of the drill body 1 through the first chip discharging groove 5A and the second chip discharging groove 5B. During the drilling processing, the cutting oil is continuously supplied through the opening of the oil holes to a part to be cut. The cutting oil supplied to the part to be cut flows within the first chip discharging groove 5A and the second chip discharging groove 5B to the back end side together with the chips. In this way, the chips are forcibly washed to the back end side of the drill body 1, and this facilitates the discharge.

The chips that are cut from the item to be cut by the inner insert 7A and the outer insert 7B during the drilling processing described above first make contact with the chip formation portion 8 of the first and second chip discharging grooves 5A and 5B. The contact of the chips with the chip formation portion 8 causes the chips to be deformed (curled) and broken. In other words, since the projections and recesses described above are formed in the surface of the chip formation portion 8, with which the chips cut from the item to be cut first makes contact, the actual contact area between the surface of the chip formation portion 8 and the chips is reduced as compared with a smooth surface. Thus, it is possible to reduce the friction force produced between the surface of the chip formation portion 8 and the chips. Consequently, the chips more smoothly pass through the chip formation portion 8. In addition, since the friction force between the chip formation portion 8 and the chips is reduced, the vibration and the chatter of the drill are also reduced.

Furthermore, since the hardened layer 8c of the chip formation portion 8 has a hardness beyond the basic hardness of the drill body 1, the wear of the chip formation portion 8 caused by the chafing of the chips is reduced. Therefore, the effect of reducing the friction force between the chip formation portion 8 and the chips is maintained for a long period of time.

The chips that are continuously cut from the item to be cut is deformed (curled) and broken by making contact with the chip formation portion 8, and thereafter the chips are completely freed from the item to be cut. Hence, the wall surface on the downstream side of the chip formation portion 8 is smoothed, and thus the chips and the cutting oil are not prevented from flowing, with the result that the chips can be smoothly discharged within the first chip discharging groove 5A and the second chip discharging groove 5B to the back end side.

Although, in the above embodiment, the first chip discharging groove 5A and the second chip discharging groove 5B are formed in a helical shape, the grooves can be changed into grooves that extend linearly in a direction parallel to the rotational axis O. Although a description is given of the case where the chip formation portion 8 is formed both in the first chip discharging groove 5A and in the second chip discharging groove 5B, the chip formation portion 8 can be formed in any one of them.

Instead of the laser quenching, the quenching of the hardened layer 8c of the chip formation portion 8 may be performed by electron beam quenching or high-frequency wave quenching. If the desired projections and recesses cannot be formed in the chip formation portion 8 by the laser quenching, the projections and recesses can be formed in the chip formation portion 8 with an end mill by machining after the formation of the hardened layer by the laser quenching.

## Claims

1. A drill body of an indexable drill, the drill body comprising:
a chip discharging groove which is formed from a front end surface to a back end side in a rotational axis direction for discharging chips produced by a cutting insert; and
an insert attachment seat on which the cutting insert formed on a front end side, in the rotational axis direction, of a first wall surface of the chip discharging groove that faces a drill rotation direction is detachably mounted,
wherein a chip formation portion is formed which includes at least any of a plurality of protruding portions that protrudes outward from a second wall surface and a plurality of concave portions that is concave inward from the second wall surface, among wall surfaces that define the chip discharging groove, at least in a front end portion of the second wall surface of the chip discharging groove that faces a rear side of the drill rotation direction.

2. The drill body of claim 1,
wherein the chip formation portion includes, in a vicinity of a surface thereof, a hardened layer that has a hardness increased higher than that of the other regions of the wall surface.

3. The drill body of claim 1 or 2,
wherein the chip formation portion is formed only in a front end portion of the chip discharging groove.

4. The drill body of any of claims 1 to 3,
wherein, on the wall surface, a marking that defines a formation range of the chip formation portion is formed.

5. The drill body of any of claims 1 to 4,
wherein a surface roughness of the chip formation portion is greater than that of the wall portion other than the chip formation portion.

6. The drill body of claim 5,
wherein the surface roughness of the wall surface other than the chip formation portion is set such that a maximum height Rz is not more than 3 µm (JIS · B0601-2001).

7. The drill body of any of claims 2 to 6,
wherein the insert attachment seat includes an inner attachment seat for mounting the cutting insert close to the rotational axis and an outer attachment seat for mounting the cutting insert away from the rotational axis,
a part of the wall surface of the chip discharging groove is formed in a thinned wall portion that is thinned by the inner attachment seat and the outer attachment seat, and
the hardened layer is formed in a vicinity of a surface of the thinned wall portion.

8. The drill body of any of claims 2 to 7,
wherein the hardened layer has a hardness of Hv 800 or less.

9. The drill body of any of claims 2 to 8,
wherein the hardened layer is present within a depth range of 0.05 mm to 0.50 mm from the surface of the chip formation portion to an inside thereof.

10. The drill body of any of claims 1 to 9,
wherein the protruding portion or the concave portion of the chip formation portion are formed by laser processing.

11. The drill body of claim 10,
wherein the hardened layer is hardened by laser quenching.

12. An indexable drill comprising:
a drill body including: a chip discharging groove which is formed from a front end surface to a back end side in a rotational axis direction for discharging chips produced by a cutting insert; and an insert attachment seat which is formed on a front end side, in the rotational axis direction, of a first wall surface of the chip discharging groove that faces a drill rotation direction; and
the cutting insert that is detachably mounted on the insert attachment seat,
wherein, in the drill body, a chip formation portion is formed which includes at least any of a plurality of protruding portions that protrudes outward from a second wall surface and a plurality of concave portions that is concave inward from the second wall surface, among wall surfaces that define the chip discharging groove, at least in a front end portion of the second wall surface of the chip discharging groove that faces a rear side of the drill rotation direction.
